# EUROPÄISCHE PATENTSCHRIFT

(11) **EP 0 640 277 B1**
(45) Veröffentlichungstag und Bekanntmachung des Hinweises auf die Patenterteilung: **29.04.1998**
(21) Anmeldenummer: 94112478.6
(22) Anmeldetag: 10.08.1994
(51) Int. Cl.: A01D 89/00, A01D 41/10

(54) **Aufnahmevorrichtung für Erntegut**
Gathering device for crops
Dispositif pour le ramassage des récoltes

(30) Priorität: 24.08.1993 DE 4328351
(43) Veröffentlichungstag der Anmeldung: 01.03.1995
(73) Patentinhaber: SAME DEUTZ-FAHR S.P.A., 24047 Treviglio (Bergamo) (IT)
(72) Erfinder: von Allwörden, Wilhelm, Dipl.-Ing., D-89168 Oberstotzingen (DE)
(74) Vertreter: Quinterno, Giuseppe

(56) Entgegenhaltungen:
- WO-A-82/01298
- DD-A- 66 312
- DE-C- 3 238 210
- US-A- 3 589 109
- US-A- 4 171 606
- US-A- 4 188 772
- US-A- 4 567 719

## Beschreibung

Die Erfindung betrifft eine landwirtschaftliche Maschine zumindest mit einer Vorrichtung zur Abnahme von gemähtem und insbesondere in einem Schwad abgelegten Erntegut gemäß dem Oberbegriff des Patentansprüches 1.

Aus der DE 41 38 013 (Anmeldetag: 19.11.1991) ist eine solche landwirtschaftliche Maschine zumindest mit einer Vorrichtung zur Aufnahme von gemähten und in einem Schwad abgelegten Erntegut, vorzugsweise Halmgut, bekannt, wobei die Vorrichtung mehrteilige Aufnahmeorgane aufweist und die jeweils endseitig an der Vorrichtung angeordneten Aufnahmeorgane einschließlich einer mehrteilig ausgebildeten Schnecke schwenkbar ausgeführt sind. Bei dieser Vorrichtung sind Räder vorgesehen, die den gesamten Aufnahmetisch einschließlich der Schnecke und der Aufnahmeorgane in einer konstanten Höhe über dem Boden halten. Diese Anordnung hat jedoch den Nachteil, insbesondere bei unebenen Bodenverhältnissen, daß einerseits das abgelegte Erntegut nicht von dem Aufnahmeorgan erfaßt wird oder andererseits direkt mit dem Boden in Kontakt kommt, so daß dies zu Beschädigungen des Aufnahmeorganes führen kann. Diese ansich bekannte Anordnung wirkt sich insbesondere nachteilig bei Vorrichtungen zur Aufnahme von Erntegut auf, mit denen mehr als ein einziger Schwad aufgenommen werden kann. Bezüglich der Verschwenkung wird in diesem Dokument lediglich vorgeschlagen, die Aufnahmeorgane aus einer Arbeitsstellung komplett in eine Transportstellung (senkrecht) zu verschwenken.

Aus der US-A-4,171,606 ist eine landwirtschaftliche Maschine mit einer Vorrichtung zur Aufnahme von gemähtem Erntegut bekannt, wobei die Vorrichtung ein einziges Aufnahmeorgan einschließlich einer dem Aufnahmeorgan zugeordneten Schnecke aufweist. Das an der Vorrichtung angeordnete Aufnahmeorgan ist schwenkbar ausgeführt. Die Verschwenkung des einzigen Aufnahmeorganes erfolgt im Zusammenspiel mit weiteren Einrichtungen zur Erfassung der Bodenverhältnisse (Bezugsziffer 35), wodurch sich die gesamte Vorrichtung in ihrer Gesamtheit höhenverschwenkbar an die Bodenverhältnisse anpaßbar ist. Auch dies ist nachteilig bei unebenen Bodenverhältnissen und vor allen Dingen dann, wenn mehr als ein Schwad aufgenommen werden soll.

Der Erfindung liegt die Aufgabe zugrunde, eine landwirtschaftliche Maschine zumindest mit einer Vorrichtung zur Aufnahme von gemähtem und insbesondere in einem Schwad abgelegten Erntegut derart auszugestalten, daß der Aufnahmeprozeß optimal und unabhängig von den vorherrschenden Bodenverhältnissen verläuft und die Aufnahme von mehr als einem Schwad oder auch lose abgelegtem Erntegut gewährleistet ist.

Diese Aufgabe ist dadurch gelöst, daß die Landwirtschaftliche Maschine so ausgebildet daß eine Verschwenkung der einzelnen Aufnahmeorgane unabhängig voneinander in Abhängigkeit der erfaßten Bodenverhältnisse erfolgt. Durch die Zuordnung einer Einrichtung zur Erfassung der Bodenverhältnissen zumindest zu den endseitig angeordneten Aufnahmeorganen, insbesondere durch die Zuordnung einer Einrichtung zu jedem Aufnahmeorgan, ist der Vorteil gegeben, daß insbesondere bei unebenen Bodenverhältnissen eine optimale und im wesentlichen komplette Aufnahme des abgelegten Erntegutes erfolgt. Dadurch wird die Ertragskraft der landwirtschaftlichen Maschine wesentlich erhöht. Darüber hinaus ist es denkbar, daß mit der erfindungsgemäßen Ausgestaltung Hangarbeiten durchführbar sind, wobei ein Teil der Vorrichtung in einer im wesentlichen waagerechten Stellung und ein anderer Teil der Vorrichtung zum Hang gerichtet arbeitet. Durch die Zuordnung von den Einrichtungen zur Erfassung der Bodenverhältnisse zu den Aufnahmeorganen wird beispielsweise erreicht, daß sowohl das in Vertiefungen als auch auf Erhöhungen abgelegte Erntegut aufgenommen wird. Darüber hinaus ist gewährleistet, daß bei entsprechender Ausgestaltung der Einrichtung Hindernisse (beispielsweise im Feld stehende Strommasten) erkannt werden und zumindest ein endseitig angeordnetes Aufnahmeorgan automatisch in eine im wesentlichen senkrechte Position verschwenkt wird. Bei den Einrichtungen zur Erfassung der Bodenverhältnisse sind beispielsweise Tasträder, Schleifer oder optische Sensoren denkbar, wobei auch elektromagnetisch wirkende Einrichtungen oder Radarsensoren Verwendung finden können. Werden beispielsweise Tasträder eingesetzt, kann aufgrund deren Anpassung an die Bodenverhältnisse die Verschwenkung der Aufnahmeorgane selbsttätig erfolgen. Bei Einsatz beispielsweise von optischen Sensoren ist es erforderlich, die einzelnen Aufnahmeorgane mit einer Einrichtung zur Verschwenkung (beispielsweise Hydraulik) zu versehen.

In Weiterbildung der Erfindung ist es vorgesehen, daß der Vorrichtung zur Aufnahme zumindest eine Einrichtung, insbesondere eine weitere Einrichtung, zur Einstellung einer vorgebbaren Höhe der Vorrichtung über dem Boden zugordnet ist. So ist bei der einteiligen Ausgestaltung des Aufnahmeorganes denkbar, daß eine Einrichtung zur Erfassung der Bodenverhältnisse, die ein Verschwenken der gesamten Vorrichtung auslöst, kombiniert wird mit einer Einrichtung zur Einstellung der vorgebbaren Höhe. Weiterhin ist es denkbar, mehrere über die Breite der Vorrichtung zur Aufnahme angeordnete Einrichtungen zur Erfassung der Bodenverhältnisse einzusetzen, wobei eine davon als Einrichtung zur Einstellung der vorgebbaren Höhe ausgestaltet ist. Unter einer Einrichtung zur Einstellung der vorgebbaren Höhe ist zu verstehen, daß es sich hierbei sowohl um einen Distanzhalter (Rad) handelt, der beispielsweise in der Mitte der Vorrichung zur Aufnahme angeordnet, als auch um eine Einrichtung mit einem Sensor, der die Höhe der Vorrichtung über dem Boden erfaßt und einer zusätzlichen Verschwenkeinrichtung (beispielsweise Pendellagerung der Vorrichtung zur Aufnahme, die über zumindest einen Hydraulikzylinder bewegt wird), die in Abhängigkeit der erfaßten Höhe und/oder einer Wertevorgabe die Vorrichtung zur Aufnahme, insbesondere das Aufnahmeorgan, höhenverschwenkt (insbesondere parallel zur Oberfläche des Bodens). Weiterhin kann die Einrichtung zur Einstellung der Höhe bei mehrteilig ausgebildeten Aufnahmeorganen vorgesehen werden.

In Weiterbildung der Erfindung weisen die Aufnahmeorgane beziehungsweise die Schnecke einen Antrieb auf und es erfolgt der Antrieb in Abhängigkeit von der Fahrgeschwindigkeit der landwirtschaftlichen Maschine. Darüber hinaus ist alternativ oder ergänzend erfindungsgemäß vorgesehen, daß der Antrieb in Abhängigkeit der Verarbeitungsgeschwindigkeit von der Vorrichtung zur Aufnahme nachgeordneten Einrichtungen erfolgt. Nähere Ausführungen dazu sind der Zeichnungsbeschreibung und den Figuren zu entnehmen.

In Weiterbildung der Erfindung weist die Vorrichtung einen Aufnahmetisch auf, der mehrteilig ausgebildet ist, wobei die Teilbereiche in Abhängigkeit der erfaßten Bodenverhältnisse höhenverschwenkbar sind. Bei dieser Ausgestaltung ist es denkbar, daß die Aufnahmeorgane in einer konstanten Höhe gehalten werden und der mehrteilige Aufnahmetisch in Abhängigkeit der erfaßten Bodenverhältnisse höhenverschwenkt wird, so daß sich das zwischen dem Aufnahmetisch und dem Aufnahmeorgan sammelnde Erntegut von der Schnecke in Richtung eines Förderkanals befördert wird. Damit ist eine weitere Ausgestaltung zur optimalen Aufnahme des abgelegten Erntegutes gegeben.

In Weiterbildung der Erfindung sind zumindest die Aufnahmeorgane parallel zur Oberfläche in Abhängigkeit der erfaßten Bodenverhältnisse höhenverschwenkbar. So ist es zum einen mögich, die Aufnahmeorgane derart verschwenkbar anzuordnen, daß diese einseitig um einen Verschwenkpunkt bewegbar sind. Alternativ beziehungsweise in Ergänzung dazu kann die Verschwenkung beziehungsweise die Anordnung der Aufnahmeorgane beispielsweise über Gelenke derart erfolgen, daß eine Höhenverschwenkung parallel zur Oberfläche erfolgt. Durch die jeweilige alleinige Ausgestaltung der Verschwenkung beziehungsweise durch die genannte Kombination ist eine Verbesserung der Anpassung an die erfaßten Bodenverhältnisse gegeben.

In Weiterbildung der Erfindung ist das zumindest eine Aufnahmeorgan als Pick-Up ausgeführt, wobei die Pick-Up als Band ausgestaltet ist. In Ergänzung dazu ist es erfindungsgemäß vorgesehen, daß auf dem Band zumindest teilweise Mittel angeordnet sind, die die Aufnahme des Erntegutes unterstützen. Die Ausgestaltung als Band (beispielsweise Gummiband) hat den Vorteil, daß gegenüber einer Ausgestaltung beispielsweise einer mit Zinken versehenen Trommel der Aufnahmevorgang ansich und insbesondere in Abhängigkeit der Bodenverhältnisse verbessert wird. Dazu ist es zur Erhöhung der Aufnahmefähigkeit vorgesehen, daß auf dem Band zumindest teilweise Mittel angeordnet sind, die die Aufnahme des Erntegutes unterstützen. Bei diesen Mittel handelt es sich in vorteilhafter Weise um quer zur Fahrtrichtung der landwirtschaftlichen Maschine angeordnete Stege, die durchgehend beziehungsweise unterbrochen auf dem Band angeordnet sind. Darüber hinaus sind Noppen beziehungsweise zinkenartige Ausgestaltungen denkbar.

In Weiterbildung der Erfindung erstreckt sich das Band im wesentlichen über die gesamte Breite der Vorrichtung zur Aufnahme und ist im Verschwenkbereich, insbesondere im Bereich der Gelenke, dehnbar. Dies hat den Vorteil, daß bei einem endseitig und verschwenkbar angeordneten Antrieb der Aufnahmeorgane eine durchgehende Aufnahmebreite gegeben ist, die den erfaßten Bodenverhältnissen anpaßbar ist und die Aufnahme von lose abgelegtem Erntegut ermöglicht.

Bei der landwirtschaftlichen Maschine handelt es sich in vorteilhafte Weise um eine selbstfahrende (alternativ um eine gezogene oder geschobene) landwirtschaftliche Maschine, bei der die Vorrichtung zur Aufnahme im vorderen Bereich der Maschine (des Fahrzeuges) angeordnet ist. Damit kann in vorteilhafter Weise das abgelegte Erntegut direkt aufgenommen werden, ohne das es von der landwirtschaftlichen Maschine vorher überfahren wird. Dadurch kommt es auch zu einer Steigerung der Qualität des Erntegutes. Bei den der Vorrichtung zur Aufnahme nachgeordneten Einrichtungen handelt es sich beispielsweise um Einrichtungen, die aus dem abgelegten Erntegut (Halmgut) einen Ballen pressen. Da es sich bei dem landwirtschaftlichen Fahrzeug um ein Fahrzeug für Großbetriebe (Lohnunternehmer) handelt, weist die Vorrichtung zur Aufnahme eine Überbreite auf, so daß die endseitig angeordneten Aufnahmeorgane für die Straßenfahrt hochklappbar sind. Alternativ dazu ist es denkbar, die gesamte Vorrichtung zur Aufnahme auf einem Transportwagen abzulegen, der beispielsweise an das Fahrzeug während der Straßenfahrt angehängt ist. Diese Ausführungsform hat den Vorteil, daß die Elemente, die die Höhenverschwenkung ermöglichen (Gelenke), einen wesentlich kleineren Verschwenkbereich aufweisen und somit konstruktiv einfach zu halten sind und dadurch die Verschleißanfälligkeit verringert wird.

Weitere Ausgestaltungen der Erfindung sind im folgenden näher beschrieben und in den Figuren gezeigt.

Es zeigen:
- Figur 1:: Eine erfindungsgemäß ausgestaltete Vorrichtung zur Aufnahme von gemähtem und insbesondere in einem Schwad abgelegten Erntegut,
- Figur 2:: eine Steuereinheit insbesondere zur Steuerung der Aufnahmeorgane.

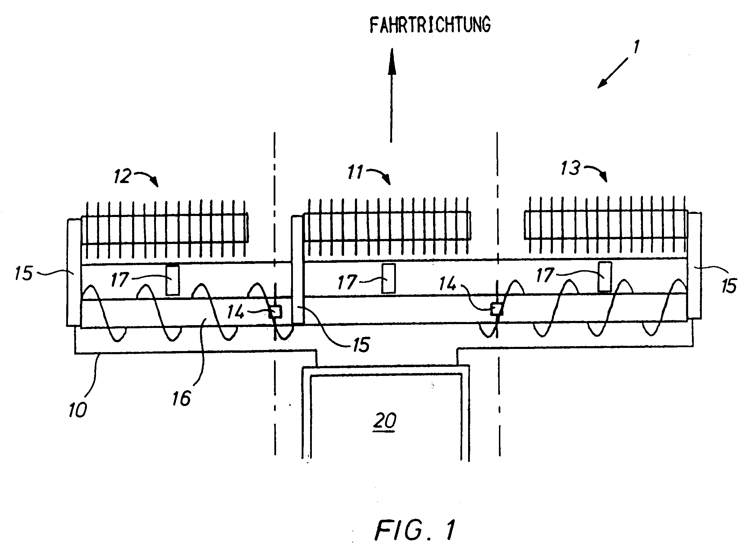

Figur 1 zeigt eine erfindungsgemäß ausgestaltete Vorrichtung zur Aufnahme von gemähtem und insbesondere in einem Schwad abgelegten Erntegut. Eine mit 1 bezeichnete Aufnahmevorrichtung, die fest oder abnehmbar an einem nicht gezeigten landwirtschaftlichen Fahrzeug angeordnet ist, weist einen Aufnahmetisch 10 auf, der die Aufnahmeorgane 11, 12 und 13 (Pick-Up) beinhaltet. In Fahrtrichtung betrachtet hinter den Aufnahmeorganen 11, 12, 13 ist eine über Gelenke 14 mehrteilig ausgestaltete und mit Antrieben 15 verbundene Schnecke 16 angeordnet. So ist es denkbar, daß die Schnecke 16 über entsprechende Verbindungselemente (beispielsweise Kette) ausgehend von einer Antriebseinheit in der landwirtschaftlichen Maschine angetrieben wird, wobei dieser Antrieb über weitere Antriebe 15, bei denen es sich auch beispielsweise um ein Getriebe handeln kann, die Aufnahmeorgane 11, 12 und 13 angetrieben werden kann. Alternativ dazu ist es denkbar, daß die Schnecke 16 und die Aufnahmeorgane 11, 12, 13 einzeln (beispielsweise hydrostatisch) angetrieben werden. Ein einzelner Antrieb der Aufnahmeorgane 11, 12, 13 hat den Vorteil, daß in Kombination mit der durch die Aufnahmeorgane 11, 12, 13 erfaßten Erntegutmenge die Aufnahmegeschwindigkeit der einzelnen Aufnahmeorgane individuell steuerbar ist, so daß durch jedes einzelne Aufnahmeorgan ein konstanter Volumenstrom aufnehmbar ist. Wie in Figur 1 gezeigt ist, ist sowohl dem mittleren Aufnahmeorgan 11 als auch den endseitig angeordneten Aufnahmeorganen 12 und 13 ein Tastrad 17 zugeordnet, mittels dessen die Bodenverhältnisse erfaßt werden und eine Verschwenkung der einzelnen Aufnahmeorgane 11, 12, 13 individuell in Abhängigkeit der durch die Tasträder 17 erfaßten Bodenverhältnisse erfolgt. Zu diesem Zweck können die endseitig angeordneten Aufnahmeorgane 12 und 13 sowie die zugeordneten Teilbereich der Schnecke 16 über die Gelenke 14 verschwenkt werden, so daß das aufgenommene Erntegut bei allen Bodenverhältnissen durch die Schnecke 16 in Richtung eines Förderkanales 20, dem Einrichtungen zur Bearbeitung des aufgenommenen Erntegutes nachgeordnet sind, zugeführt werden.

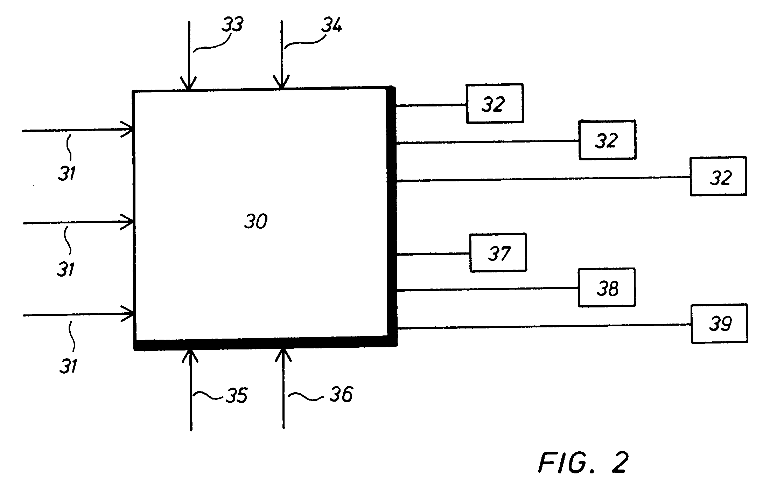

Figur 2 zeigt eine elektronische Steuereinheit. Mit der Bezugsziffer 30 ist eine elektronische Steuereinheit bezeichnet, die ein eigener Bestandteil oder ein Modul einer kompletten Regelung von Einrichtungen in der landwirtschaftlichen Maschine sein kann. Der Steuereinheit 30 werden über Sensoren 31 Informationen über die Bodenverhältnisse im Bereich der Aufnahmeorgane 11, 12, 13 zugeführt. In Abhängigkeit der von den Sensoren 31 erfaßten Bodenverhältnissen ist es vorgesehen, über Aktuatoren 32 (beispielsweise Hydraulikzylinder) die Aufnahmeorgane 11, 12, 13 individuell zu verschwenken. Weiterhin sind Sensoren 33 zur Erfassung der Fahrtgeschwindigkeit der landwirtschaftlichen Maschine und Sensoren 34 zur Erfassung der Verarbeitungsgeschwindigkeit von der Vorrichtung zur Aufnahme nachgeordneten Einrichtungen vorgesehen. Mit der Bezugsziffer 35 ist ein Sensor zur Erfassung der aufgenommenen Erntegutmenge und/oder einer Höhe der Vorrichtung zur Aufnahme über dem Bodenn und mit der Bezugsziffer 36 eine Wertevorgabe (es ist auch eine Vorgabe der Höhe denkbar) bezeichnet. Mit der Bezugsziffer 37 ist ein Modul für den beziehungsweise die Antriebe der Aufnahmeorgane, mit der Bezugsziffer 38 ein Modul, das einen Eingriff in ein Motormanagement insbesondere einer selbstfahrenden Maschine gestattet, und mit der Bezugsziffer 39 ein Modul, das einen Eingriff in ein Antriebsmanagement der der Vorrichtung zur Aufnahme nachgeordneten Einrichtungen gestattet, bezeichnet. So ist es zur Automatisierung des Aufnahme- beziehungsweise des Verarbeitungsvorganges denkbar, daß anhand der Wertevorgabe 36 eine Fahrtgeschwindigkeit und/oder eine Verarbeitungsgeschwindigkeit vorgegeben wird. Anhand der vorgegebenen Geschwindigkeiten kann dann durch einen entsprechenden Regelalgorithmus (insbesondere Soll/Ist-Vergleich) der Aufnahmevorgang automatisiert werden. So ist es beispielsweise denkbar, daß bei Vorgabe einer gewünschten Verarbeitungsgeschwindigkeit durch einen Eingriff in das Antriebsmanagement erfolgt. Darüber hinaus ist es denkbar, durch einen Eingriff in das Antriebsmanagement der der Vorrichtung zur Aufnahme nachgeordneten Einrichtungen deren Verarbeitungsgeschwindigkeit in Abhängigkeit der Fahrtgeschwindigkeit, insbesondere in Abhängigkeit einer konstanten Fahrtgeschwindigkeit, zu beeinflußen. Weiterhin ist es vorgesehen, die Aufnahmegeschwindigkeit der einzelnen Antriebe der Aufnahmeorgane durch das Modul 37 individuell zu steuern.

## Patentansprüche

1. Landwirtschaftliche Maschine zumindest mit einer Vorrichtung (1) zur Aufnahme von gemähtem und insbesondere in einem Schwad abgelegten Erntegut, vorzugsweise Halmgut, wobei die Vorrichtung (1) mehrteilige Aufnahmeorgane (11, 12, 13) einschließlich einer diesen zugeordneten Schnecke (16) aufweist, und die jeweils endseitig an der Vorrichtung (1) angeordneten Aufnahmeorgane (11, 12, 13) schwenkbar ausgeführt sind, wobei zumindest den endseitig angeordneten Aufnahmeorganen (11, 12, 13) eine Einrichtung (17) zur Erfassung der Bodenverhältnisse zugeordnet ist,
*dadurch gekennzeichnet*, daß die Landwirtschaftliche Maschine so ausgebildet ist daß eine Verschwenkung der einzelnen Aufnahmeorgane (11, 12, 13) unabhängig voneinander in Abhängigkeit der erfaßten Bodenverhältnisse erfolgt.

2. Landwirtschaftliche Maschine nach Anspruch 1,
*dadurch gekennzeichnet*, daß der Vorrichtung (1) zur Aufnahme zumindest eine Einrichtung, insbesondere eine weitere Einrichtung, zur Einstellung einer vorgebbaren Höhe der Vorrichtung (1) über dem Boden zugordnet ist.

3. Landwirtschaftliche Maschine nach einem der vorhergehenden Ansprüche,
*dadurch gekennzeichnet*, daß die Aufnahmeorgane (11, 12, 13) beziehungsweise die Schnecke (17) einen Antrieb (15) aufweisen und der Antrieb (15) Abhängigkeit von der Fahrtgeschwindigkeit der landwirtschaftlichen Maschine erfolgt.

4. Landwirtschaftliche Maschine nach einem der vorhergehenden Ansprüche,
*dadurch gekennzeichnet*, daß der Antrieb (15) in Abhängigkeit der Verarbeitungsgeschwindigkeit von der der Vorrichtung (1) zur Aufnahme nachgeordneten Einrichtungen erfolgt.

5. Landwirtschaftliche Maschine nach einem der vorhergehenden Ansprüche,
*dadurch gekennzeichnet*, daß die Vorrichtung (1) einen Aufnahmetisch (10) aufweist, der mehrteilig ausgebildet ist, wobei die Teilbereiche in Abhängigkeit der erfaßten Bodenverhältnisse höhenverschwenkbar sind.

6. Landwirtschaftliche Maschine nach einem der vorhergehenden Ansprüche,
*dadurch gekennzeichnet*, daß zumindest die Aufnahmeorgane (11, 12, 13) parallel zur Oberfläche in Abhängigkeit der erfaßten Bodenverhältnisse höhenverschwenkbar sind.

7. Landwirtschaftliche Maschine nach einem der vorhergehenden Ansprüche,
*dadurch gekennzeichnet*, daß das zumindest eine Aufnahmeorgang (11, 12, 13) als Pick-Up ausgeführt ist, wobei die Pick-Up als Band ausgestaltet ist.

8. Landwirtschaftliche Maschine nach einem der vorhergehenden Ansprüche,
*dadurch gekennzeichnet*, daß auf dem Band zumindest teilweise Mittel angeordnet sind, die die Aufnahme des Erntegutes unterstützen.

9. Landwirtschaftliche Maschine nach einem der vorhergehenden Ansprüche,
*dadurch gekennzeichnet*, daß sich das Band im wesentlichen über die gesamte Breite der Vorrichtung (1) erstreckt und im Verschwenkbereich (im Bereich der Gelenke 14) dehnbar ist.

## Claims

1. An agricultural machine with at least one device (1) for gathering in reaped crop to be harvested, preferably crop with a stem, especially that laid in a windrow, wherein the device (1) has take-up units (11, 12, 13) comprising a plurality of parts and a screw conveyor (16) associated thereto, and the take-up units (11, 12, 13) arranged on the ends of the device (1) can be swivelled, wherein a device (17) for the capture of ground conditions is associated at least to the take-up units (11, 12, 13) arranged at the ends
*characterised in that* the agricultural machine is arranged such that the individual take-up units (11, 12, 13) are swivelled independently of one another as a function of captured ground conditions.

2. An agricultural machine according to claim 1, *characterised in that* the device (1) for gathering in crop has at least one assembly, especially a further assembly for adjustment of a pre-determinable height of the device (1) above the ground.

3. An agricultural machine according to one of the preceding claims, *characterised in that* the take-up units (11, 12, 13) or the screw conveyor (17) have a drive unit (15) and the drive (15) is dependent on the travel speed of the agricultural machine.

4. An agricultural machine according to one of the preceding claims, *characterised in that* the drive (15) is dependent on the processing speed of the assemblies arranged downstream of the device for gathering-in crop (1).

5. An agricultural machine according to one of the preceding claims, *characterised in that* the device (1) has a take-up table (10) which comprises a plurality of parts, with some parts capable of undergoing swivel movement in height as a function of the captured ground conditions.

6. An agricultural machine according to one of the preceding claims, *characterised in that* at least the take-up units (11, 12, 13) are swivellable in height parallel to the ground surface as a function of the captured ground conditions.

7. An agricultural machine according to one of the preceding claims, *characterised in that* at least one take-up unit (11, 12, 13) is arranged as a pick-up which is in the form of a belt.

8. An agricultural machine according to one of the preceding claims, *characterised in that* means are arranged over at least part of the belt and support take-up of the crop to be harvested.

9. An agricultural machine according to one of the preceding claims, *characterised in that* the belt extends substantially over the entire width of the device (1) and is stretchable in the swivel region (in the region of the articulations (14)).

## Revendications

1. Machine agricole comportant au moins un dispositif (1) pour ramasser des produits de récolte fauchés, et notamment déposés sous la forme d'un andain, de préférence des produits en tige, le dispositif (1) comportant des organes de ramassage (11, 12, 13) en plusieurs parties, y compris une vis (16) associée à ces organes de ramassage et ceux-ci sont réalisés de manière pivotante, chaque fois à l'extrémité des organes de ramassage (11, 12, 13) prévus d'un côté du dispositif (1), au moins aux organes de ramassage (11, 12, 13) prévus d'un côté, étant associé un moyen (17) pour détecter l'état du sol
caractérisé en ce que la machine agricole est réalisée de façon à ce que les différents organes de ramassage (11, 12, 13) basculent indépendamment les uns des autres, en fonction de l'état du sol détecté.

2. Machine agricole selon la revendication 1,
caractérisée en ce que
le dispositif (1) de ramassage comprend au moins une installation notamment une autre installation pour régler une hauteur prédéterminée du dispositif (1) au-dessus du sol.

3. Machine agricole selon l'une quelconque des revendications précédentes,
caractérisée en ce que
les organes de ramassage (11, 12, 13) ou la vis (16) comportent un moteur (15) et le moteur (15) est entraîné en fonction de la vitesse de circulation de la machine agricole.

4. Machine agricole selon l'une quelconque des revendications précédentes,
caractérisée en ce que
l'entraînement (15) se fait en fonction de la vitesse de travail des installations en aval du dispositif de ramassage (1).

5. Machine agricole selon l'une quelconque des revendications précédentes,
caractérisée en ce que
le dispositif (1) comporte un plateau de ramassage (10) composé de plusieurs parties, les zones partielles pouvant être pivotées en hauteur en fonction de l'état de sol détecté.

6. Machine agricole selon l'une quelconque des revendications précédentes,
caractérisée en ce qu'
au moins les organes de ramassage (11, 12, 13) sont relevables parallèlement à la surface supérieure, en fonction de l'état de sol détecté.

7. Machine agricole selon l'une quelconque des revendications précédentes,
caractérisée en ce qu'
au moins un organe de ramassage (11, 12, 13) en forme de pick-up, et le pick-up est en forme de bande.

8. Machine agricole selon l'une quelconque des revendications précédentes,
caractérisée en ce que
sur la bande, au moins partiellement il y a des moyens qui renforcent l'action des produits à récolter.

9. Machine agricole selon l'une quelconque des revendications précédentes,
caractérisée en ce que
la bande s'étend essentiellement sur toute la largeur du dispositif (1) et est extensible dans la zone de pivotement (au niveau de l'articulation (14)).
